Europäisches Patentamt

European Patent Office

Office européen des brevets

(11) Veröffentlichungsnummer: **0 503 334 A1**

## (12) EUROPÄISCHE PATENTANMELDUNG

(21) Anmeldenummer: **92102991.4**

(22) Anmeldetag: **22.02.92**

(51) Int. Cl.5: **C08G 18/30**, B32B 27/40, C08G 18/66

(30) Priorität: **08.03.91 DE 4107454**

(43) Veröffentlichungstag der Anmeldung: **16.09.92 Patentblatt 92/38**

(84) Benannte Vertragsstaaten: **AT BE CH DE DK ES FR GB IT LI NL PT SE**

(71) Anmelder: **BASF Aktiengesellschaft Carl-Bosch-Strasse 38 W-6700 Ludwigshafen(DE)**

(72) Erfinder: **Zeitler, Gerhard, Dr. Lessingstrasse 11 W-6717 Hessheim(DE)** Erfinder: **Friedl, Thomas, Dr. Fingerkrautweg 5 W-2840 Diepholz(DE)**

(54) **Verbundelemente aus einer Deck- und Trägerschicht aus thermoplastischen Polyurethanen, ein Verfahren zu ihrer Herstellung und ihre Verwendung.**

(57) Gegenstände der Erfindung sind ein Verbundelement, bestehend aus einer elastischen, zelligen Deckschicht (A) und einer steifen Trägerschicht (B) aus thermoplastischen Polyurethanen, wobei das Polyurethan-Elastomere (B) der Trägerschicht hergestellt wird durch Umsetzung von

Ba) 1 Mol mindestens eines im wesentlichen linearen, höhermolekularen Polyesterols oder Polyetherols,

Bb) 6 bis 15 Molen eines organischen Diisocyanats, vorzugsweise 4,4'-Diphenylmethan-diisocyanat und

Bc) 5 bis 14 Molen mindestens eines Alkandiols oder Dialkylenglykols

in Gegenwart von

Bd) 0,05 bis 0,3 Gew.-%, bezogen auf das Gesamtgewicht von (a) bis (c), Wasser sowie gegebenenfalls

Be) Katalysatoren und

Bf) Hilfsmitteln und/oder Zusatzstoffen,

ein Verfahren zur Herstellung der Verbundelemente und ihre Verwendung als gepolsterte Ausstattungsteile für Verkehrsmittel.

EP 0 503 334 A1

Gegenstände der Erfindung sind ein Verbundelement, das besteht aus einer elastischen, zelligen Deckschicht (A) und einer steifen Trägerschicht (B) aus thermoplastischen Polyurethanen, wobei das Polyurethan-Elastomere (B) der Trägerschicht hergestellt wird durch Umsetzung von

Ba) 1 Mol mindestens eines im wesentlichen linearen, höhermolekularen Polyesterols oder Polyetherols,

Bb) 6 bis 15 Molen eines organischen Diisocyanats und

Bc) 5 bis 14 Molen mindestens eines Alkandiols oder Alkylenglykols

in Gegenwart von

Bd) 0,05 bis 0,3 Gew.-%, bezogen auf das Gesamtgewicht von (Ba) bis (Bc), Wasser

sowie gegebenenfalls

Be) Katalysatoren und

Bf) Hilfsmitteln und/oder Zusatzstoffen,

ein Verfahren zur Herstellung der Verbundelemente und ihre Verwendung.

Verbundelemente, die bestehen aus einer Deckschicht, z.B. einer Kunststoffolie, aus Polyvinylchlorid oder einem polyvinylchloridhaltigen Polymerisatgemisch, z.B. ABS/PVC, und die mit einem Polyurethanschaumstoff - im folgenden auch abgekürzt PU-Schaumstoff genannt - z.B. einem weichelastischen oder halbharten PU-Schaumstoff, mit Hilfe eines Formwerkzeugs hinterschäumt wurden, sind seit langem bekannt und werden z.B. beschrieben im Kunststoff-Handbuch "Polyurethane" Band 7, 2. Auflage, 1983, herausgegeben von Dr. G. Oertel (Seiten 235 ff., Carl Hanser Verlag, München, Wien).

Verbundelemente dieser Art besitzen insbesondere in der Automobilindustrie eine große technische Bedeutung und finden Verwendung z.B. als Sitzkissen, Rückenlehnen, Nacken- und Armstützen, Sonnenblenden, Instrumententafeln, Armaturenbretter, Türseitenverkleidungen u.a.

Geeignete Deckschichten können nach bekannten Verfahren hergestellt werden. Polyvinylchlorid (PVC)-Folien können beispielsweise nach dem Powder-slush-Verfahren erhalten werden. Hierzu wird das Formwerkzeug in einem Ofen auf ungefähr 250°C erhitzt, danach das pulverförmige PVC gleichmäßig darauf verteilt und zum Ausgelieren der PVC-Folie das Formwerkzeug erneut im Ofen erwärmt. Nach dem Abkühlen des Formwerkzeugs, z.B. in einem Wasserbad, kann die Folie entnommen und zur Hinterschäumung eingesetzt werden. Nach einer anderen Verfahrensweise, dem Slush-moulding, wird ein Galvanowerkzeug vollständig mit einem PVC-Plastisol, das aus ca. 55 Gew.-% PVC, 35 Gew.-% Weichmacher und Hilfsstoffen sowie gegebenenfalls einer Farbpaste besteht, gefüllt. Beim Aufheizen des Formwerkzeuges wird das PVC-Plastisol an den Wandungen vorgeliert. Der Überschuß wird abgetrennt und die Gelierung bei 280 bis 350°C zu Ende geführt.

PVC/ABS, PVC/ABS/Polyvinylacetat-Polymerisatgemische werden zur Herstellung von großflächigen Deckschichten, z.B. für Armaturenbrettoder Türseitenverkleidungen, Konsolen u.a., fast ausschließlich nach dem Vakuumtiefziehverfahren verarbeitet. Die aus Polymerisatgemischen bestehenden Folien werden mit IR-Strahlern vorgeheizt und über Tiefziehwerkzeugen, z.B. aus Epoxidharzen oder Aluminium, vakuumverformt.

Zur Herstellung der Verbundelemente finden Deckschichten, vorzugsweise Folien, mit einer je nach Herstellungsverfahren unterschiedlichen Dicke von ungefähr 0,5 bis 3 mm, vorzugsweise von 0,8 bis 1,5 mm, Verwendung.

Mit PVC oder polyvinylchloridhaltigen Polymerisaten als Deckschicht versehene Verbundelemente zeigen beträchtliche Nachteile. Bekanntermaßen beginnt PVC bei einer thermischen Belastung allein sowie in Kombination mit UV-Licht sich schon ab 100°C merklich unter Chlorwasserstoffabspaltung zu zersetzen. Diese Zersetzung wird durch den PU-Schaumstoff, der Harnstoff- und Urethangruppen gebunden enthält, autokatalytisch beschleunigt (Vysokomol. soyed. A 30, Nr. 4, Seiten 829-833, 1988). Um lunkerfreie PU-Formkörper zu erhalten, werden vielfach zur Abstimmung einer kontrollierten Polyadditions- und Treibreaktion spezielle Aminkatalysatoren eingesetzt, die ebenfalls zum PVC-Abbau beitragen. So diffundieren Bestandteile, wie z.B. Katalysatoren, Stabilisatoren, u.a. aus dem PU-Schaumstoff in die Deckschicht und umgekehrt erfolgt eine Weichmachermigration aus der polyvinylchloridhaltigen Deckschicht in den PU-Schaumstoff. Durch diese Migrationsprozesse werden die Formkörper, z.B. durch Schwindungen oder Versprödungen, mechanisch geschädigt und verändern durch Verfärbung und Fleckenbildung ihr Aussehen (Kunststofftechnik, VDI-Verlag GmbH, Düsseldorf, 1987, Kunststoffe als Problemlöser im Automobilbau" Seiten 141 ff).

Nachteilig an Verbundelementen aus unterschiedlichen Kunststoffarten ist ferner ihre schwierige Recyclingfähigkeit, die jedoch zunehmend an Bedeutung gewinnt. Bei mehrschichtigen Verbundelementen, die beispielsweise aus einer kompakten Deck- oder Dekorschicht, z.B. aus einer Polyvinylchloridfolie, einer zelligen Zwischenschicht, z.B. einem flexiblen PU-Schaumstoff oder Polypropylenschaumstoff, und einer steifen Trägerschicht, z.B. aus einem Metall oder Polyamid, bestehen können, müssen diese in die einzelnen Bestandteile zerlegt und sortiert werden. Da zur Zeit geeignete Trennvorrichtungen hierfür noch nicht verfügbar sind, ist diese Trennung personalabhängig und daher sehr kostenintensiv.

Bekannt ist ferner die Herstellung von PU-Schaumstoffen aus zahlreichen Patent- und Literaturveröffentlichungen sowie die Herstellung von NCO-Gruppen enthaltenden Prepolymeren.

Die Aufgabe der Erfindung bestand darin, ein gepolstertes Verbundelement zu entwickeln, das im wesentlichen aus einem Werkstoff besteht und daher vollständig recyclingfähig sein sollte. Das Verbundelement sollte auf möglichst einfache Weise preisgünstig, mit Hilfe technisch bewährter Vorrichtungen hergestellt werden können. Außerdem sollte der Wärme- und Kristallisationsschrumpf auf ein akzeptables Maß reduziert werden.

Diese Aufgabe konnte überraschenderweise gelöst werden mit Hilfe thermoplastisch verarbeitbarer Polyurethane, - im folgenden abgekürzt auch TPU genannt -, die je nach der Verwendung als elastische Deckschicht oder steife Trägerschicht eine unterschiedliche chemische Struktur und verschiedenartige mechanische Eigenschaften aufweisen.

Gegenstand der Erfindung sind somit Verbundelemente, die aufgebaut sind aus

A) einem elastischen, zelligen Polyurethan-Flächengebilde aus einem thermoplastischen Polyurethan als Deckschicht und

a) einem thermoplastischen Polyurethan-Elastomeren als Trägerschicht, das seinerseits hergestellt wird durch Umsetzung von

Ba) 1 Mol mindestens eines im wesentlichen linearen Polyester- oder Polyetherols mit einem Molekulargewicht von 600 bis 3000,

Bb) 6 bis 15 Holen eines organischen Diisocyanats und

Bc) 5 bis 14 Holen mindestens eines Alkandiols oder Dialkylenglykols

in Gegenwart von

Bd) 0,05 bis 0,3 Gew.%, bezogen auf das Gesamtgewicht von (Ba) bis (Bc), Wasser.

Die Herstellung der Trägerschicht erfolgt ferner vorzugsweise in Gegenwart von

Be) Katalysatoren sowie gegebenenfalls

Bf) Hilfsmitteln und/oder Zusatzstoffen.

Ein anderer Gegenstand der Erfindung ist ein Verfahren zur Herstellung der Verbundelemente nach dem Patentanspruch 9 und ihre bevorzugte Verwendung als gepolsterte Ausstattungsteile für Verkehrsmittel gemäß Anspruch 10.

Die erfindungsgemäß aus TPU hergestellten Verbundelemente sind vollständig recyclingfähig. Sie können durch Erhitzen verflüssigt und in flüssigem Zustand zu Granulaten verarbeitet werden. Aus dem TPU-Granulat können nach den bekannten Methoden der Thermoplastverarbeitung erneut Formkörper hergestellt werden.

Durch die Verwendung der Aufbaukomponenten (Ba) bis (Bc) zur Herstellung der TPU-Elastomeren (B) in den erfindungsgemäßen Mengenverhältnissen, wobei das Äquivalenzverhältnis von NCO-Gruppen der organischen Diisocyanate (Bb) zur Summe der Hydroxylgruppen von (Ba) und (Bc) zweckmäßigerweise einen Wert im Bereich von 0,85:1 bis 1,1:1 besitzt, werden gut fließfähige, leicht handhabbare Reaktionsmischungen erhalten, die nach der Aushärtung TPU-Elastomere mit der für Trägerschichten technisch erforderlichen Steifigkeit ergeben. Durch die Mitverwendung von Wasser wird die Steifigkeit des TPU-Trägers erhöht, ohne daß dessen Dichte über Gebühr reduziert wird. Durch den Wasserzusatz und die dadurch erzielte geringe Zellbildung in der Trägerschicht wird außerdem der Wärme- und Kristallisationsschrumpf des TPU-Elastomeren auf ein akzeptables Maß reduziert. Um die maximale Reaktionstemperatur durch die freiwerdende Reaktionswärme möglichst niedrig zu halten, wird die Umsetzung vorzugsweise nach der Prepolymerfahrweise durchgeführt.

Zu den zur Herstellung der erfindungsgemäßen Verbundelemente verwendbaren TPU für die elastischen, zelligen PU-Flächengebilde als Deckschicht (A) und als Trägerschicht (B) ist folgendes auszuführen:

A) Geeignete elastische, zellige PU-Flächengebilde als Deckschichten (A) besitzen üblicherweise eine Dicke von 0,1 bis 25 mm, vorzugsweise von 0,5 bis 20 mm und insbesondere von 2 bis 10 mm, eine Gesamtdichte von 0,2 bis 1,0 $g/cm^3$, vorzugsweise von 0,2 bis 0,8 $g/cm^3$ und insbesondere von 0,3 bis 0,5 $g/cm^3$ und zweckmäßigerweise auf einer Seite, der Sichtfläche, eine glatte, kompakte, im wesentlichen porenfreie Oberfläche. Die PU-Flächengebilde (A) können nach bekannten Verfahren hergestellt werden. Vorzugsweise erfolgt ihre Herstellung durch Sintern einer Mischung, die enthält

i) mindestens ein pulverförmiges, thermoplastisches Polyurethan (A) und

ii) mindestens ein bei 23°C festes Treibmittel,

bei erhöhter Temperatur, z.B. bei 180 bis 280°C, mit Hilfe eines Formwerkzeugs.

Zu ihrer Herstellung verwendet man ein TPU (A) oder zweckmäßigerweise TPU (A)-Mischungen aus mindestens zwei TPU (A) mit unterschiedlichen Schmelzindices, wobei vorteilhafterweise so verfahren wird, daß das TPU (A) oder die TPU (A)-Mischung mit einem hohen Schmelzindex zunächst zur Bildung der kompakten, im wesentlichen zellfreien Oberfläche versintert wird und man anschließend in Gegenwart eines festen Treibmittels das TPU (A) oder die TPU (A)-Mischung mit einem niedrigen Schmelzindex bzw. höheren Erweichungspunkt verschäumt unter gleichzeitiger Sinterung.

Zur Herstellung der elastischen, zellhaltigen PU-Flächengebilde als Deckschicht (A) finden vorteilhafterweise ein oder mehrere TPU (A) Verwendung, die einen Schmelzindex (MFI) bei 190°C und einem Auflagegewicht von 212 N (21,6 kp), vorzugsweise von 50 bis 350 und insbesondere von 100 bis 300 und eine Shore-A-Härte vorzugsweise von 60 bis 98 und insbesondere von 80 bis 95 besitzen.

TPU (A) mit derartigen Schmelzindices und Härten entsprechen dem Stand der Technik und können hergestellt werden durch Umsetzung von

Aa) Polyhydroxylverbindungen, vorzugsweise im wesentlichen linearen Polyhydroxylverbindungen mit Molekulargewichten von 500 bis 8000, insbesondere Polyalkylenglykolpolyadipaten mit 2 bis 6 C-Atomen im Alkylenrest und Molekulargewichten von 500 bis 6000 oder Polyoxytetramethylen-glykolen mit einem Molekulargewicht von 500 bis 3500,

Ab) organischen und/oder modifizierten organischen Diisocyanaten und

Ac) Diolen als Kettenverlängerungsmitteln mit Molekulargewichten von 60 bis 400, insbesondere Butandiol-1,4

in Gegenwart von

Ae) Katalysatoren und gegebenenfalls

Af) Hilfsmitteln und/oder Zusatzstoffen

bei erhöhten Temperaturen.

Zu den Aufbaukomponenten (Aa) bis (Ac) und gegebenenfalls (Ae) und/oder (Af) ist folgendes auszuführen:

Aa) Als höhermolekulare Polyhydroxylverbindungen (Aa) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt z.B. durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Sehr gut geeignet sind ferner die hydroxylgruppenhaltigen Polymerisationsprodukte des Tetrahydrofurans, die Polyoxytetramethylen-glykole, wobei solche mit Molekulargewichten von 500 bis 3500 besonders bevorzugt sind.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- und/oder -diester mit 1 bis 4 Kohlenstoffatomen im Alkoholrest, Dicarbonsäureanhydride oder Dicarbonsäuredichloride zu verwenden. Beispiele für mehrwertige Alkohole sind Alkandiole mit 2 bis 10, vorzugsweise 2 bis 6 Kohlenstoffatomen und/oder Dialkylenetherglykole mit 4 bis 12, vorzugsweise 4 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Alkandiolen oder Dialkylenglykolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.
Ab) als organische Diisocyanate (Ab) kommen vorzugsweise aliphatische, cycloaliphatische und aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5,2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanatsowie die entsprechenden Isomerengemische, 4,4'-, 2,4'- und 2,2'-Dicyclohexylmethan-diisocyanat sowie die entsprechenden Isomerengemische und aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat,Hexamethylen-diisocyanat-1,6, Isophoron-diisocyanat und 4,4'- und/oder 2,4'-Dicyclohexylmethan-diisocyanat.

Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weit gehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.

Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.

Ac) Als Kettenverlängerungsmittel (Ac) mit Molekulargewichten von 60 bis 400, vorzugsweise 60 bis 300, kommen vorzugsweise aliphatische Diole oder Dialkylenglykole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-($\beta$-hydroxyethyl)-hydrochinon sowie Polyoxytetramethylenglykole mit Molekulargewichten von 162 bis 378.

Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (Ac) ansteigt, während der Schmelzindex abnimmt.

Zur Herstellung der TPU (A) werden die im wesentlichen difunktionellen Polyhydroxylverbindungen (Aa) und Diolen (Ac) vorteilhafterweise in Molverhältnissen von 1 : 2 bis 1 : 6, vorzugsweise von 1 : 2,5 bis 1 : 4,5 verwendet, so daß die resultierenden TPU's eine Härte nach Shore A von 60 bis 98, vorzugsweise von 80 bis 95 besitzen.

Ae) Geeignete Katalysatoren, welche insbesondere die Reaktion zwischen den NCO-Gruppen der Diisocyanate (Ab) und den Hydroxylgruppen der Aufbaukomponenten (Aa) und (Ac) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, Diazabicyclo-(2.2.2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (Aa) und Diolen (Ac) eingesetzt.

Af) Neben Katalysatoren können den Aufbaukomponenten auch Hilfsmittel und/oder Zusatzstoffe (Af) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe.

Die Hilfsmittel und/oder Zusatzstoffe (Af) können hierzu in die Aufbaukomponenten oder in die Reaktionsmischung zur Herstellung der TPU (A) eingebracht werden. Nach einer anderen Verfahrensvariante können die Hilfsmittel und/oder Zusatzstoffe (Af) jedoch auch mit dem TPU (A) gemischt und anschließend verschmolzen werden. Die zuletzt genannte Methode findet insbesondere Anwendung zum Einbringen von Aluminiumoxid und/oder Kieselgel sowie gegebenenfalls verstärkend wirkenden Füllstoffen.

Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Zur Herstellung der TPU (A) werden die Aufbaukomponenten (Aa), (Ab) und (Ac) in Gegenwart von Katalysatoren (Ae) und gegebenenfalls Hilfsmitteln und/ oder Zusatzstoffen (Af) in solchen Mengen zur Reaktion gebracht, daß das Äquivalenzverhältnis von NCO-Gruppen der Diisocyanate zur Summe der Hydroxylgruppen der Komponenten (Aa) und (Ac) 0,80 bis 1,20:1, vorzugsweise 0,95 bis 1,05:1 und insbesondere ungefähr 1:1 beträgt.

Die erfindungsgemäß verwendbaren TPU (A) können hergestellt werden nach dem Extruder- oder vorzugsweise Bandverfahren durch batchweises oder kontinuierliches Mischen der Aufbaukomponenten (Aa) bis (Ac) sowie gegebenenfalls (Ae) und/oder (Af), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (A). Gegebenenfalls kann es zweckmäßig sein, das erhaltene TPU (A) vor der Weiterverarbeitung bei 80 bis 120°C, vorzugsweise 100 bis 110°C über einen Zeitraum von 1 bis 24 Stunden zu tempern.

Die TPU (A) werden, wie bereits ausgeführt wurde, bevorzugt nach dem Bandverfahren hergestellt. Hierzu werden die Aufbaukomponenten (Aa) bis (Ac) und gegebenenfalls (Ae) und/oder (Af) bei Temperaturen oberhalb des Schmelzpunktes der Aufbaukomponenten (Aa) bis (Ac) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.%, vorzugsweise von 0,1 bis 0,5 Gew.% liegen, werden TPU (A) mit einer relativ niedrigen Schmelzviskosität bzw. einem hohen Schmelzindex erhalten.

Es hat sich als vorteilhaft erwiesen, z.B. zur Modifizierung der mechanischen Eigenschaften der elastischen, zellhaltigen PU-Flächengebilde (A) oder deren Lichtbeständigkeit sowie nach Art ihrer Verwendung, anstelle von einem TPU (A), Mischungen aus zwei oder mehreren TPU (A) in bestimmten, experimentell ermittelbaren Gewichtsmengen zu verwenden.

So können beispielsweise schwarz eingefärbte zellhaltige PU-Flächengebilde aus TPU's (A) auf Basis von aromatischen Diisocyanaten, vorzugsweise 4,4'-Diphenylmethandiisocyanat, und nahezu beliebigen Polyhydroxylverbindungen (Aa) und Diolen (Ac) hergestellt werden. TPU (A) auf Basis aliphatischer Diisocyanate sind zwar lichtstabil, sie kristallisieren aber relativ schwer und sind nach einer thermoplastischen Verarbeitung nur schwierig handhabbar. Durch Abmischen von TPU (A) auf Basis von aromatischen Diisocyanaten mit solchen auf der Grundlage von aliphatischen und/oder cycloaliphatischen Diisocyanaten kann beispielsweise die Lichtbeständigkeit der elastischen, zellhaltigen Flächengebilde erheblich verbessert werden, ohne daß die TPU-Mischung bei der Verarbeitung nennenswert zum Verkleben mit dem Formwerkzeug neigt. Nach dieser Methode können aus TPU (A), hergestellt auf der Grundlage von aromatischen und aliphatischen und/oder cycloaliphatischen Diisocyanaten zellhaltigen Formkörpern mit für andere Farbeinstellungen ausreichender Lichtstabilität erhalten werden, die überraschenderweise im wesentlichen vollständig klebfrei sind.

In analoger Weise können durch geeignete Wahl von TPU (A) aus unterschiedlichen Polyhydroxylverbindungen, insbesondere solchen aus Polyetherolen oder Polyesterolen, beispielsweise die mechanischen Eigenschaften der elastischen, zellhaltigen PU-Flächengebilde, ihre Oxidations- oder Hydrolysestabilität sowie je nach Wahl des Diisocyanats, wie bereits ausgeführt wurde, die Lichtbeständigkeit gezielt modifiziert werden.

Zur Herstellung von weichen, elastischen, zellhaltigen PU-Flächengebilden finden z.B. vorzugsweise TPU-Mischungen Verwendung, die, bezogen auf 100 Gew.-Teile, bestehen aus

A1) 40 bis 99,5 Gew.-Teilen, vorzugsweise 60 bis 85 Gew.-Teilen eines TPU (A1), hergestellt unter Verwendung von aromatischen Diisocyanaten, vorzugsweise 4,4'-Diphenylmethan-diisocyanat und

A2) 0,5 bis 60 Gew.-Teilen, vorzugsweise 15 bis 40 Gew.-Teilen eines TPU (A2), hergestellt unter Verwendung von aliphatischen Diisocyanaten, vorzugsweise ausgewählt aus der Gruppe Hexamethylendiisocyanat-1,6, Isophoron-diisocyanat und 4,4'-Dicyclohexylmethan-diisocyanat oder Mischungen aus mindestens zwei der genannten Diisocyanate oder

TPU-Mischungen, die, bezogen auf 100 Gew.-Teile, bestehen aus

AI) 60 bis 99,5 Gew.-Teilen, vorzugsweise 70 bis 90 Gew.-Teilen eines TPU (AI), hergestellt unter Verwendung mindestens eines Polyoxyalkylen-glykols, z.B. eines Polyoxypropylen-, Polyoxypropylen-polyoxyethylen- oder Polyoxytetramethylen-glykols und

AII) 0,5 bis 40 Gew.-Teilen, vorzugsweise 10 bis 30 Gew.-Teilen eines TPU (AII), hergestellt unter Verwendung von Polyester-diolen, vorzugsweise Polyalkandiolpolyadipaten mit 2 bis 6 C-Atomen im Alkandiolrest

sowie insbesondere TPU-Mischungen, die, bezogen auf 100 Gew.-Teile, bestehen aus

A1I) 60 bis 95 Gew.-Teilen, vorzugsweise 70 bis 90 Gew.-Teilen eines TPU (A1I), hergestellt unter Verwendung von 4,4'-Diphenylmethan-diisocyanat und eines Polyoxytetramethylen-glykols mit einem Molekulargewicht im Bereich von 500 bis 3500

und

A2II) 5 bis 40 Gew.-Teilen, vorzugsweise 10 bis 30 Gew.-Teilen eines TPU (A2II), hergestellt unter Verwendung von Isophoron-diisocyanat und eines Polyester-diols, vorzugsweise eines Polyalkandiol-polyadipats mit einem Molekulargewicht im Bereich von 800 bis 3500.

Die durch Sintern zur Herstellung von elastischen, zellhaltigen PU-Flächengebilden geeigneten TPU (A) werden zweckmäßigerweise mittels geeigneter bekannter Vorrichtungen, z.B. Mühlen, zerkleinert und mit einer durchschnittlichen Korngrößenverteilung von 1 bis 1000 $\mu m$, vorzugsweise von 50 bis 800 $\mu m$ und insbesondere von 100 bis 500 $\mu m$ gesintert.

Zur Verbesserung der Rieselfähigkeit dieser TPU (A)-Pulver sowie insbesondere zur Reduzierung der Fließfähigkeit der TPU (A)-Schmelze an senkrechten oder überhitzten Formwerkzeugstellen werden den pulverförmigen TPU (A) zweckmäßigerweise pulverförmiges Aluminiumoxid oder insbesondere pulverförmiges Kieselgel sowie gegebenenfalls Mischungen aus Aluminiumoxid und Kieselgel einverleibt. Bereits durch den Zusatz von 0,05 bis 1 Gew.-Teilen, vorzugsweise von 0,1 bis 0,3 Gew.-Teilen Aluminiumoxid und/oder Kieselgel, bezogen auf 100 Gew.-Teile TPU (A)-Pulver, konnte ein Abfließen der TPU (A)-Schmelze beim Sintern an senkrechten Formwerkzeugoberflächen oder ein Wegfließen an überhitzten Formwerkzeugstellen, verbunden mit der Ausbildung von Dünnstellen oder Löchern, insbesondere in zellhaltigen Flächengebilden mit einer geringen Schichtdicke, vermieden werden. Mit Hilfe dieser Verfahrensvariante können z.B. zellhaltige Flächengebilde mit sehr gleichmäßiger Dickenverteilung hergestellt werden.

Wie bereits dargelegt wurde können den TPU (A) oder TPU (A)-Pulvern zusätzlich Hilfsmittel und/oder Zusatzstoffe einverleibt werden.

Genannt seien Füllstoffe, z.B. organische Füllstoffe, wie z.B. Ruß und Melamin und anorganische Füllstoffe, wie z.B. Quarzmehl, Talkum, amorphe Kieselsäure oder Mischungen davon.

Als Flammschutzmittel haben sich z.B. bewährt: Melamin, Blähgraphit, Ammoniumpolyphosphate, Polyhalogendiphenylether, Polyhalogenphthalsäure und ihre Derivate, Polyhalogenoligo- und -polycarbonate, wobei die entsprechenden Bromverbindungen besonders wirksam sind. Als Flammschutzmittel eignen sich ferner Phosphorverbindungen, wie elementarer Phosphor oder organische Phosphorverbindungen. Außerdem enthalten die Flammschutzmittel in der Regel zusätzlich einen Synergisten, z.B. Antimontrioxid.

Geeignete Oxidationsverzögerer und Wärmestabilisatoren sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.%, bezogen auf das Gewicht des TPU (A) verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.%, bezogen auf das Gewicht des TPU (A), eingesetzt werden.

Entformungsmittel, die in der Regel ebenfalls in Mengen bis zu 1 Gew.%, bezogen auf das Gewicht des TPU (A) zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Zur Herstellung der elastischen, zellhaltigen PU-Flächengebilde (A), finden vorteilhafterweise bei 23°C feste Treibmittel (ii) Verwendung, die zweckmäßigerweise in Form eines feinen Pulvers, beispielsweise mit einer durchschnittlichen Partikelgröße von 1 bis 300 $\mu m$, vorzugsweise von 5 bis 100 $\mu m$ und insbesondere von 10 bis 80 $\mu m$ eingesetzt werden, wobei die Partikelgröße die Zersetzungstemperatur und -geschwindigkeit beeinflussen. Als feste Treibmittel finden zweckmäßigerweise chemische Verbindungen Verwendung, die sich innerhalb eines bestimmten, nicht zu großen Temperaturintervalls zersetzen und eine hohe Gasausbeute aufweisen. Hierbei muß die Zersetzungstemperatur der Verarbeitungstemperatur und der thermischen Beanspruchbarkeit des zu verschäumenden TPU (A) angepaßt sein. Diese Bedingungen können experimentell leicht ermittelt werden. Die Zersetzung des Treibmittels darf nicht spontan erfolgen, so daß ein Wärmestau und die Verbrennung des TPU (A) vermieden werden. Das feste Treibmittel soll sich vorzugsweise homogen mit dem TPU (A) vermischen lassen und soll Zersetzungsprodukte ergeben, die gesundheitlich unbedenklich sind, die Thermostabilität und mechanischen Eigenschaften der zellhaltigen PU-Flächengebilde (A) möglichst nicht negativ beeinflussen, nicht ausblühen und keine Verfärbungen hervorrufen.

Feste Treibmittel, die diese Anforderungen zumindest teilweise oder im wesentlichen vollständig erfüllen, sind beispielsweise Azoverbindungen, wie z.B. Azoisobuttersäurenitril, Azodicarbonamid, vielfach auch Azobisformamid genannt, oder Barium-azodicarboxylat, Hydrazine wie z.B. Diphenylsulfon-3,3'-disulfohydrazid, 4,4'-Oxybis(benzolsulfohydrazid), Trihydrazinotriazin oder Arylbis(sulfohydrazid), Semicarbazide wie z.B. p-Toluylensulfonylsemicarbazid oder 4,4'-Oxybis(benzolsulfonyl-semicarbazid), Triazole wie z.B. 5-Morpholyl-1,2,3,4-thiatriazol und N-Nitroso-Verbindungen wie z.B. N,N'-Dinitrosopentamethylentetramin oder N,N-Dimethyl-N,N'-dinitrosoterephthalamid. Von den genannten Verbindungen haben sich besonders die Azo-Verbindungen und Hydrazine bewährt, so daß vorzugsweise Azoisobuttersäurenitril, Diphenylsulfon-3,3'-disulfohydrazid, 4,4'-Oxybis-(benzolsulfohydrazid) und insbesondere Azodicarbonamid Anwendung finden. Die festen Treibmittel können als Einzelverbindungen oder als Mischungen eingesetzt werden.

Die zur Herstellung der elastischen, zellhaltigen PU-Flächengebilde (A) erforderliche Treibmittelmenge hängt u.a. ab von der gewünschten Dichte und Dicke des Flächengebildes sowie der Gasausbeute des Treibmittels. üblicherweise eingesetzt werden 0,05 bis 18 Gew.-Teile, vorzugsweise 0,1 bis 10 Gew.-Teile und insbesondere 0,5 bis 4 Gew.-Teile eines oder mehrerer, vorzugsweise eines bei 23°C festen, pulverförmigen Treibmittels (ii) pro 100 Gew.-Teile mindestens eines pulverförmigen TPU (A).

Zur Herstellung der elastischen, zellhaltigen PU-Flächengebilde werden mindestens ein pulverförmiges TPU (A) und mindestens ein pulverförmiges Treibmittel (ii) bei einer Temperatur üblicherweise unter 80°C, vorzugsweise zwischen 0 und 65°C mit an sich bekannten Mischvorrichtungen, wie z.B. Mischern, hergestellt von den Draiswerke GmbH oder der Firma Henschel, homogen gemischt. Die TPU-Treibmittelmischung wird anschließend in einer hinsichtlich der gewünschten Dicke des Flächengebildes ausreichenden Menge auf die Formwerkzeugoberfläche des auf 180°C bis 280°C, vorzugsweise 190 bis 250°C und insbesondere 190 bis 240°C temperierten Formwerkzeug aufgebracht und nach kurzem Kontakt, z.B. nach einer Kontaktzeit von 10 bis 30 Sekunden, vorzugsweise von 16 bis 25 Sekunden, die überschüssige TPU-Treibmittelmischung abgetrennt. Die an der Formwerkzeugoberfläche anhaftende TPU-Treibmittelpulverschicht läßt man mittels der Wärmekapazität des Formwerkzeugs oder durch erneute Erwärmung, z.B. durch Beheizung in einem Ofen oder durch Bestrahlung, sintern unter Aufschäumung, üblicherweise unter Einhaltung eines relativ engen Temperaturintervalls im vorgenannten Temperaturbereich. Zur Erzielung spezieller Eigenschaften, wie z.B. eines elastischen, zellhaltigen PU-Flächengebildes mit einer im wesentlichen porenfreien, glatten Oberfläche kann es zweckmäßig sein, die Oberflächentemperatur des Formwerkzeugs kontinuierlich oder stufenweise zu erhöhen. Diese Verfahrensvariante wird bevorzugt bei Verwendung von Mischungen aus TPU (A) mit unterschiedlichen Schmelzindizes angewandt, wobei z.B. ein TPU (A) mit niedrigem Erweichungspunkt zunächst zu einer kompakten Oberfläche gesintert wird und danach unter Erhöhung der Temperatur in den Zersetzungsbereich des Treibmittels das TPU (A) mit höherem Erweichungsbereich unter Aufschäumung gesintert wird.

Nach der Beendigung des Schäum- und Sinterprozesses, der üblicherweise innerhalb eines Zeitraums von 0,25 bis 5 Minuten, vorzugsweise von 0,5 bis 3 abläuft, läßt man das Formwerkzeug, z.B. an der Luft, in einem gegebenenfalls gekühlten Inertgas- und/oder Luftstrom oder in einem Wasserbad, abkühlen und entformt den gebildeten zellhaltigen Formkörper innerhalb 30 bis 60 Sekunden.

Die durch Sintern hergestellten elastischen, zellhaltigen PU-Flächengebilde (A) für die Deckschicht zeichnen sich durch gute mechanische Eigenschaften, insbesondere eine hohe Reißfestigkeit, einen trockenen, angenehmen Griff und eine nahezu völlige Geruchslosigkeit aus.

B) Als Trägerschicht finden gemäß der Erfindung TPU-Elastomere Verwendung, die hergestellt werden durch Umsetzung von

Ba) 1 Mol mindestens eines im wesentlichen linearen Polyether- oder vorzugsweise Polyesterols mit einem Molekulargewicht von 600 bis 3000, vorzugsweise von 1000 bis 2300,

Bb) 6 bis 15 Molen, vorzugsweise 9 bis 12 Molen eines organischen, vorzugsweise aromatischen Diisocyanats und

Bc) 5 bis 14 Molen, vorzugsweise 8 bis 11 Molen mindestens eines Alkylenglykols oder vorzugsweise eines Alkandiols

in Gegenwart von

Bd) 0,05 bis 0,3 Gew.-%, vorzugsweise 0,08 bis 0,15 Gew.-%, bezogen auf das Gesamtgewicht von (Ba) bis (Bc), Wasser und gegebenenfalls

Be) Katalysatoren

sowie gegebenenfalls

Bf) Hilfsmitteln und/oder Zusatzstoffen.

Ba) Als Aufbaukomponente (Ba) können die unter (Aa) beschriebenen Polyetherole und vorzugsweise Polyesterole verwendet werden mit der Maßgabe, daß diese ein Molekulargewicht im Bereich von 600 bis 3000 besitzen. Vorzüglich bewährt haben sich und daher vorzugsweise verwendet werden Polyoxytetramethylenglykole und im wesentlichen lineare Polyalkandiolpolyadipate mit 2 bis 6 Kohlenstoffatomen im Alkandiolrest, insbesondere 1,4-Butandiolpolyadipate.

Bb) Als organische Diisocyanate eignen sich aliphatische, cycloaliphatische und vorzugsweise aromatische Diisocyanate. Beispielhaft genannt seien 1,6-Hexamethylen-diisocyanat, Isophoron-diisocyanat, 2,4'-Diphenylmethandiisocyanat, 1,5-Naphthylen-diisocyanat und vorzugsweise 4,4'-Diphenylmethan-diisocyanat.

Bc) Als Dialkylenglykole geeignet sind beispielsweise Diethylenglykol, Dipropylenglykol und Dibutylenglykol. Vorzugsweise Anwendung finden jedoch Alkandiole, zweckmäßigerweise solche mit 2 bis 6, vorzugsweise 2, 4 oder 6 Kohlenstoffatomen, wie z.B. Ethandiol, 1,3-Propandiol, 1,5-Pentandiol, 1,6-Hexandiol und vorzugsweise 1,4-Butandiol.

Bd) Wie bereits dargelegt wurde, wird die Herstellung der TPU-Elastomeren (B) in Gegenwart von 0,05 bis 0,3 Gew.-% Wasser, bezogen auf das Gesamtgewicht von (Aa) bis (Ac) durchgeführt zur Erhöhung der Steifigkeit des Trägermaterials (B) und zur Verminderung seines Schrumpfverhaltens. Bei Verwendung größerer Wassermengen wird die Dichte des TPU-Elastomeren (B) zu stark erniedrigt und damit auch seine Steifigkeit reduziert.

Be) Analog der Herstellung der TPU (A) für die Deckschicht können auch zur Herstellung des TPU (B) für die Trägerschicht Katalysatoren, wie z.B. die unter (Ae) genannten, eingesetzt werden. Vorzugsweise Anwendung finden als Katalysatoren Diazabicyclo-(2.2.2)-octan und Dibutylzinndilaurat, die üblicherweise in einer Menge von 0,0002 bis 0,04 Gew.-%, vorzugsweise 0,001 bis 0,25 Gew.-%, bezogen auf das Gewicht der Aufbaukomponente (Ba) bis (Bc) eingesetzt werden.

Bf) Als Hilfsmittel und/oder Zusatzstoffe (Bf) zur Herstellung des TPU (B) eignen sich beispielsweise die unter (Af) genannten Verbindungen. Vorzugsweise Anwendung finden Füllstoffe zur Erhöhung der Steifigkeit des Trägermaterials. Als Füllstoffe insbesondere bewährt haben sich Talkum, Kieselgur, Kohlenstoff- oder Glasfasern, die üblicherweise in Mengen bis zu 30 Gew.-%, vorzugsweise von 15 bis 25 Gew.-%, bezogen auf das Gewicht der Aufbaukomponenten (Ba) bis (Bc) eingesetzt werden.

Zur Herstellung der TPU-Elastomeren (B) für die Trägerschicht werden die Aufbaukomponenten (Ba) bis (Bd), vorzugsweise in Gegenwart von Katalysatoren (Be) und gegebenenfalls Hilfsmitteln und/oder Zusatzstoffen (Bf) nach dem one shot-Verfahren oder vorzugsweise dem Prepolymerverfahren in solchen Mengen zur Reaktion gebracht, daß das Äquivalenzverhältnis von NCO-Gruppen der Diisocyanate (Bb) zur Summe der Hydroxylgruppen der Aufbaukomponenten (Ba) und (Bc) 0,85 : 1 bis 1,1 : 1, vorzugsweise 0,95 : 1 bis 1,05 : 1 beträgt.

Die Trägerschicht aus den TPU-Elastomeren (B) besitzt im allgemeinen eine Schichtdicke von 2 bis 8 mm, vorzugsweise von 3 bis 6 mm, eine Dichte von 0,9 bis 1,3 $g/cm^3$, vorzugsweise von 0,95 bis 1,1 $g/cm^3$, wobei die Dichte bei der Mitverwendung von Füllstoffen üblicherweise größer als 1,0 $g/cm^3$ ist und eine Steifigkeit in Abwesenheit von Füllstoffen von 400 bis 600 $N/mm^2$, vorzugsweise von 450 bis 550 $N/mm^2$ und in Gegenwart von Füllstoffen von 600 bis 2000 $N/mm^2$, vorzugsweise von 700 bis 1000 $N/mm^2$.

Zur Herstellung der erfindungsgemäßen Verbundelemente wird das elastische, zellige Polyurethan-Flächengebilde (A) als Deckschicht nach der oben beschriebenen Methode direkt im Formwerkzeug hergestellt oder dieses wird vorzugsweise in einem vorgängigen Verfahrensschritt hergestellt, falls erforderlich zwischengelagert und in das Formwerkzeug eingelegt. Sofern die Deckschicht (A) eine glatte, im wesentlichen porenfreie Oberfläche als Sichtfläche aufweist, wird diese der Innenfläche des Formwerkzeugs zugewandt eingelegt. Nach dem bevorzugt angewandten Verfahren besitzt das Formwerkzeug eine Temperatur von 50 bis 100°C, vorzugsweise von 60 bis 80°C.

Die flüssige Reaktionsmischung, die beim one shot-Verfahren durch Vermischen der Ausgangsstoffe (Ba) bis (Bd) sowie gegebenenfalls (Be) und (Bf) erhalten wird oder vorzugsweise zur Erniedrigung der maximalen Reaktionstemperatur nach dem Prepolymerverfahren hergestellt wird durch Mischen bei üblicherweise 15 bis 50°C, vorzugsweise 20 bis 35°C, eines NCO-Gruppen enthaltenden Prepolymeren, das seinerseits erhalten wird durch Umsetzung von 1 Mol mindestens eines im wesentlichen linearen Polyesterols oder Polyetherols mit einem Molekulargewicht von 600 bis 3000 (Ba) mit 6 bis 15 Molen eines organischen Diisocyanats (Bb) und einer Mischung, die enthält 5 bis 14 Molen mindestens eines Alkandiols oder Dialkylenglykols (Bc), 0,05 bis 0,3 Gew.-%, bezogen auf das Gesamtgewicht von (Ba) bis (Bc) Wasser sowie gegebenenfalls Katalysatoren (Be), Hilfsmitteln und/oder Zusatzstoffen (Bf), wird so in das Formwerkzeug eingebracht, daß die Deckschicht (A) auf der dem Formwerkzeughohlraum zugewandten Seite mit der Reaktionsmischung in Berührung kommt. Das Formwerkzeug wird anschließend verschlossen. Sofern das Formwerkzeug aus einer Ober- und Unterform besteht, wird durch Schließen der Oberform die Reaktionsmischung zusätzlich über die Deckschicht (A) verteilt. Nach dem Aushärten der Reaktionsmischung wird das gebildete Verbundelement entformt. Die Entformzeit beträgt üblicherweise 2 bis 6 Minuten.

Die erfindungsgemäßen Verbundelemente finden vorzugsweise Verwendung im Innenbereich von Verkehrsmitteln, vorzugsweise von Kraftfahrzeugen, als gepolsterte Ausstattungsteile, z.B. als Sicherheitsabdeckungen, Ablagebehälter oder -fächer, Sonnenblenden und insbesondere Armaturentafeln.

Beispiele

Herstellung eines elastischen, zelligen PU-Flächengebildes aus TPU als Deckschicht (A).

Beispiel 1

Eine bei Raumtemperatur hergestellte Mischung, bestehend aus
72 Gew.-Teilen
eines TPU mit einer Shore-A-Härte von 85 und einem Schmelzindex bei 190°C und einem Auflagegewicht von 212 N von 230, hergestellt durch Umsetzung von 1 Mol Polyoxytetramethylen-glykol mit einem Molekulargewicht von 1000, 3,5 Molen 4,4'-Diphenylmethan-diisocyanat und 2,5 Molen Butandiol-1,4 nach dem Bandverfahren,
24 Gew.-Teilen
eines TPU mit einer Shore-A-Härte von 85 und einem Schmelzindex bei 190°C und einem Auflagegewicht von 212 N von 180, hergestellt durch Umsetzung von 1 Mol Butandiol-1,4-polyadipat mit einem Molekulargewicht von 2000, 3 Molen Isophoron-diisocyanat und 2 Molen Butandiol-1,4 nach dem Bandverfahren,
0,65 Gew.-Teilen
Ultramarinblau,
0,24 Gew.-Teilen
Lichtgelb,
0,12 Gew.-Teilen
Heliogengrün®,
0,20 Gew.-Teilen
Ruß,
0,40 Gew.-Teilen

Titandioxid,
0,79 Gew.-Teilen
Kreide (Microcalcilin®,)
0,8 Gew.-Teilen
Irganox®1010 als Oxidationsstabilisator und
0,8 Gew.-Teilen
Tinuvin®328 als UV-Stabilisator
wurde bei 212°C in einem Zweiwellenextruder vom Typ ZSK zusammengeschmolzen. Das erhaltene Granulat hatte eine Shore-A-Härte von 85 und einen Schmelzindex bei 190°C und einem Auflagegewicht von 212 N von 220.

Das Pulver daraus wurde auf einer Stiftmühle unter Zugabe von flüssigem Stickstoff hergestellt und hatte eine durchschnittliche Korngröße von 100 bis 500 $\mu$m.

Zur Herstellung des zellhaltigen Flächengebildes (A) wurden 100 Gew.-Teile des erhaltenen TPU-Pulvers mit 0,1 Gew.-Teilen eines feinteiligen Kieselgels, und 2,5 Gew.-Teilen Azodicarbonamid mit einer durchschnittlichen Teilchengröße von 50 $\mu$m bei 23°C homogen vermischt.

Die TPU-Treibmittel-Kieselgel-Mischung wurde auf eine auf 200°C temperierte Stahlplatte aufgebracht, nach einer Kontaktzeit von 30 Sekunden die überschüssige Pulvermischung abgeschüttet, danach die auf der Stahlplatte verbliebene TPU-Treibmittel-Kieselgel-Mischung zunächst eine Minute bei 210°C und anschließend 2 Minuten bei 230°C gesintert. Nach dem Abkühlen des Formwerkzeugs in einem Luftstrom auf eine Temperatur von ungefähr 50°C wurde das PU-Flächengebilde entformt.

Man erhielt ein weiches, elastisches, zellhaltiges PU-Flächengebilde (A) mit einer Dicke von 3 mm und einer Gesamtdichte von 0,4 g/cm$^3$, das an der dem Formwerkzeug zugewandten Seite eine glatte, kompakte Oberfläche aufwies.

Herstellung des Verbundelementes

Beispiel 2

a) Herstellung eines NCO-Gruppen enthaltenden Prepolymeren
Eine Mischung aus
140 Gew.-Teilen
4,4'-Diphenylmethan-diisocyanat und
100 Gew.-Teilen
eines 1,4-Butandiolpolyadipats mit einem Molekulargewicht von 2000
wurden auf 100°C unter Rühren erwärmt und bei dieser Temperatur 3 Stunden lang umgesetzt.
Man erhielt ein NCO-Gruppen enthaltendes Prepolymer mit einem NCO-Gehalt von 1,7 Gew.-%.

b) Herstellung des Verbundelements

In ein auf 75° C temperiertes Formwerkzeug wurde das gemäß Beispiel 1 hergestellte PU-Flächengebilde (A) so eingelegt, daß die glatte, kompakte Oberfläche der Formwerkzeuginnenfläche zugewandt war.

1000 Gew.-Teile

des gemäß 2a hergestellten Prepolymeren wurden bei 23° C mit

einer Mischung, bestehend aus

190,2 Gew.-Teilen 1,4-Butandiol,

1,2 Gew.-Teilen Wasser und

8 Gew.-Teilen einer 25 gew.-%igen Lösung von Diazabicyclooctan in 1,4-Butandiol,

unter intensivem Rühren vermischt.

Die Reaktionsmischung wurde auf das PU-Flächengebilde (A) im Formwerkzeug ausgegossen und das Formwerkzeug geschlossen. Nach einer Aushärtungszeit von 4 Minuten wurde das Verbundelement entformt.

Nach dem Abkühlen auf Raumtemperatur und Lagern über 24 Stunden zeigte das Verbundelement keinerlei sichtbaren Veränderungen.

Das TPU-Elastomere der Trägerschicht (B) besaß eine Steifigkeit von 5,20 N/mm$^2$. Die Schwindung bei einer Dichte von 0,98 g/cm$^3$ betrug 0,9 %.

Beispiel 3

Man verfuhr analog den Angaben des Beispiels 2, versetzte jedoch die 1000 Gew.-Teile des NCO-Gruppen enthaltenden Prepolymeren zusätzlich mit 120 Gew.-Teilen einer gemahlenen Glasfaser.

Man erhielt ein Verbundelement, dessen Trägerschicht (B) eine Steifigkeit von 715 N/mm$^2$ besaß.

**Patentansprüche**

1. Verbundelement, aufgebaut aus

A) einem elastischen, zelligen Polyurethan-Flächengebilde aus einem thermoplastischen Polyurethan als Deckschicht und

B) einem thermoplastischen Polyurethan-Elastomeren (B) als Trägerschicht, das seinerseits hergestellt wird durch Umsetzung von

Ba) 1 Mol mindestens eines im wesentlichen linearen Polyester- oder Polyetherols mit einem Molekulargewicht von 600 bis 3000,

Bb) 6 bis 15 Holen eines organischen Diisocyanats und

Bc) 5 bis 14 Holen mindestens eines Alkandiols oder Dialkylenglykols

in Gegenwart von

Bd) 0,05 bis 0,3 Gew.%, bezogen auf das Gesamtgewicht von (Ba) bis (Bc), Wasser.

2. Verbundelement nach Anspruch 1, dadurch gekennzeichnet, daß man die thermoplastischen Polyurethan-Elastomeren (B) in Gegenwart von

Be) Katalysatoren sowie gegebenenfalls

Bf) Hilfsmitteln und/oder Zusatzstoffen

herstellt.

3. Verbundelement nach Anspruch 1, dadurch gekennzeichnet, daß man die thermoplastischen Polyurethan-Elastomeren (B) herstellt durch Umsetzung von

Ba) 1 Mol mindestens eines im wesentlichen linearen Polyalkylenglykolpolyadipats oder Polyoxytetramethylenglykols mit einem Molekulargewicht von 600 bis 3000,

Bb) 6 bis 15 Molen 4,4'-Diphenylmethandiisocyanat und

Bc) 5 bis 14 Holen Butandiol-1,4

in Gegenwart von

Bd) 0,05 bis 0,3 Gew.-%, bezogen auf das Gesamtgewicht von (Ba) bis (Bc), Wasser.

4. Verbundelement nach Anspruch 1, dadurch gekennzeichnet, daß zur Herstellung der thermoplastischen Polyurethan-Elastomeren (B) das Äquivalenzverhältnis von NCO-Gruppen der organischen Diisocyanate (Bb) zur Summe der Hydroxylgruppen des Polyesterols oder Polyetherols (Ba) und Alkandiols oder Dialkylenglykols (Bc) 0,85 bis 1,1 : 1 beträgt.

5. Verbundelement nach Anspruch 1, dadurch gekennzeichnet, daß das thermoplastische Polyurethan-Elastomere (B) eine Dichte von 0,95 bis 1,1 g/cm$^3$ und eine Steifigkeit von 400 bis 2000 N/mm$^2$ besitzt.

6. Verbundelement nach Anspruch 1, dadurch gekennzeichnet, daß das elastische, zellige Polyurethan-Flächengebildete aus thermoplastischem Polyurethan (A) auf einer Seite eine glatte, im wesentlichen porenfreie Oberfläche besitzt.

7. Verbundelement nach Anspruch 1, dadurch gekennzeichnet, daß das elastische, zellige Polyurethan-Flächengebilde aus thermoplastischem Polyurethan (A) hergestellt wird durch Sintern bei erhöhter Temperatur einer Mischung, die enthält

i) mindestens ein pulverförmiges, thermoplastisches Polyurethan (A) und

ii) mindestens ein bei 23° C festes Treibmittel.

8. Verbundelement nach Anspruch 1, dadurch gekennzeichnet, daß das elastische, zellige Polyurethan-Flächengebilde aus thermoplastischem Polyurethan (A) eine Dicke von 0,1 bis 25 mm besitzt und hergestellt wird durch Sintern einer Mischung, die enthält

> i) mindestens ein pulverförmiges, thermoplastisches Polyurethan (A) mit einem Schmelzindex (MFI) bei 190°C und einem Auflagegewicht von 212 N (21,6 kp) von 50 bis 350 und einer Shore-A-Härte von 60 bis 98 und
> ii) mindestens ein bei 23°C pulverförmiges Treibmittel aus der Gruppe Azoisobuttersäurenitril, Azodicarbonamid, Diphenylsulfon-3,3'-disulfohydrazid und 4,4'-Oxybis(benzolsulfohydrazid),

mit Hilfe eines Formwerkzeugs bei einer Temperatur im Bereich von 180 bis 280°C.

9. Verfahren zur Herstellung eines Verbundelements, das aufgebaut ist aus

> A) einem elastischen, zelligen Polyurethan-Flächengebilde aus thermoplastischem Polyurethan als Deckschicht und
> B) einem thermoplastischen Polyurethan-Elastomeren als Trägerschicht,

mit Hilfe eines Formwerkzeugs,

dadurch gekennzeichnet, daß man

das elastische, zellige Polyurethan-Flächengebilde als Deckschicht (A) in das Formwerkzeug einlegt,

die flüssige Reaktionsmischung (B), hergestellt durch Mischen eines NCO-Gruppen enthaltenden Prepolymeren, das seinerseits erhalten wird durch Umsetzung von 1 Mol mindestens eines im wesentlichen linearen Polyesterols oder Polyetherols mit einem Molekulargewicht von 600 bis 3000 (Ba) mit 6 bis 15 Molen eines organischen Diisocyanats (Bb) und einer Mischung, die enthält
5 bis 14 Molen mindestens eines Alkandiols oder Dialkylenglykols (Bc), 0,05 bis 0,3 Gew.-%, bezogen auf das Gesamtgewicht von (Ba) bis (Bc), Wasser sowie gegebenenfalls Katalysatoren (Be),
Hilfsmittel und/oder Zusatzstoffe (Bf)

so in das Formwerkzeug einbringt, daß die Deckschicht (A) auf der dem Formwerkzeughohlraum zugewandten Seite mit der Reaktionsmischung in Berührung kommt,

das Formwerkzeug verschließt,
die Reaktionsmischung aushärten läßt und danach das gebildete Verbundelement entformt.

10. Verwendung der Verbundelemente nach Anspruch 1 als gepolsterte Ausstattungsteile für Verkehrsmittel, vorzugsweise Armaturentafeln für Kraftfahrzeuge.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y A | AT-A-350 219 (VEB SYNTHESEWERK SCHWARZHEIDE) <br> * Seite 3, Zeile 41 - Seite 4, Zeile 42; Anspruch; Beispiele 1,2 * <br> --- | 1,3,5 <br> 6,9,10 | C08G18/30 <br> B32B27/40 <br> C08G18/66 |
| Y A | WO-A-8 908 672 (TYNDALE PLAINS HUNTER, LTD.) <br> * Ansprüche 1,30 * <br> --- | 1,4 <br> 3 | |
| Y | DE-A-1 669 550 (UNITED ELASTIC CORP.) <br> * Seite 4, Absatz 3 - Seite 6, Absatz 3; Ansprüche 1-4; Beispiel 1 * <br> --- | 1-5 | |
| Y A | DE-A-2 917 478 (BATTELLE - INSTITUT E.V.) <br> * Anspruch 1; Abbildung 2; Beispiel * <br> --- | 1,2 <br> 6 | |
| A | US-A-4 061 815 (POOLE, JR.) <br> * Spalte 2, Zeile 45 - Spalte 3, Zeile 68; Abbildung 1 * <br> --- | 1,8-10 | |
| A | US-A-4 211 848 (D.H. BLOUNT) <br> * Spalte 1, Zeile 42 - Spalte 2, Zeile 10; Ansprüche 1,2,4,7 * <br> --- | 1-4 | RECHERCHIERTE SACHGEBIETE (Int. Cl.5) |
| A | US-A-4 423 185 (MATSUMOTO ET AL.) <br> * Spalte 6, Zeile 63 - Spalte 7, Zeile 31 * <br> * Spalte 9, Zeile 40 - Zeile 54; Ansprüche 1,3,4 * <br> * Spalte 11, Zeile 67 - Spalte 12, Zeile 17 * <br> --- | 1,2 | C08G <br> B32B |
| A | DE-A-2 616 067 (SCOTT PAOER COMPANY) <br> * Seite 3, Zeile 1 - Seite 5, Absatz 3; Beispiel A * <br><br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 23 JUNI 1992 | DERZ T. |